# EUROPEAN PATENT APPLICATION

(11) **EP 3 996 075 A1**
(43) Date of publication of application: **11.05.2022**
(21) Application number: 21202859.1
(22) Date of filing: 15.10.2021
(51) Int. Cl.: G09G 3/00, G09G 5/02, G06T 19/00, G06F 3/147, G09G 5/14, G06T 3/40

(54) **IMAGE RENDERING SYSTEM AND METHOD**

(30) Priority: 10.11.2020 GB 202017706
(71) Applicant: Sony Interactive Entertainment Inc., Tokyo 108-0075 (JP)
(72) Inventor: SANDERS, Matthew, London, W1F 7LP (GB); CERRATO, Maurizio, London, W1F 7LP (GB); BREUGELMANS, Mark, London, W1F 7LP (GB); GRANT, Jessica, London, W1F 7LP (GB); CONNOR, Patrick, London, W1F 7LP (GB)
(74) Representative: D Young & Co LLP

(57) **Abstract**

An image rendering system for generating one or more images of a virtual environment, the system comprising an object identifying unit operable to identify one or more objects in the virtual environment, and to identify one or more rendering parameters associated with each object, and a rendering unit operable to render an image comprising one or more of the identified objects in accordance with the corresponding rendering parameter, wherein the rendering parameter specifies a respective minimum level of detail with which the object is to be rendered.

## Description

### BACKGROUND OF THE INVENTION

### Field of the invention

This disclosure relates to an image rendering system and method.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

In recent years there have been significant advances in the quality of content that is able to be rendered, enabling video content to be generated that is sufficiently high quality so as to be considered life-like in many cases. This has been driven in part by the advances in hardware that is available to content creators and/or rendering devices (such as games consoles or personal computers).

Such content is desirable for many applications, such as generating video content (such as in movies) or in video games. However, realistic content is considered particularly desirable for use in virtual reality (VR) content. This is because such content seeks to provide an immersive experience to a user that is as similar to the real-world as possible. Such content is often provided via a head-mountable display unit (HMD) so as to increase the level of immersion that is experienced by the user, by removing the user's view of the real-world environment in which they are present.

While such content is desirable, the generation of such content can still impose a significant processing burden upon a content generating or rendering device. This processing burden may be particularly problematic in view of the frame rate at which content is often provided in some arrangements; in some cases content may be generated at 120 frames per second, which reduces the amount of time available to generate such content relative to older content. The use of higher frame rates is considered to be particularly useful in VR arrangements, as this can reduce the latency in the image generation process and thereby reduce the risk of motion sickness or the like. In view of these problems, it is considered advantageous to be able to improve the efficiency of the rendering process.

One example of an improvement to rendering processes is that of foveal rendering. This is an example of a method in which different parts of a display are rendered with different levels of image quality. Such techniques are implemented to take advantage of characteristics of human eyesight; only a small region (the foveal region) of a user's field of view is at a high level of detail. The remaining portions of a user's field of view (the peripheral regions) can only sense a relatively low level of detail. Foveal rendering therefore generates image content that has a high level of detail in a first region (often corresponding to the portion of a display upon which the user's gaze if focused) and a lower level of detail in a second region. This can enable a more efficient use of a render budget, in that by lowering the level of detail in peripheral regions a higher level of detail can be provided in the foveal region.

However, foveal rendering techniques may not be appropriate in many cases. For example, information may be lost by generating content with a low level of detail - while not in the viewer's foveal region, this may still be noticeable (for instance, when the low level of detail rendering reduces the colour information that is present). Additionally, there is a latency associated with the obtaining of gaze tracking information and supplying this to the rendering process - this can lead to an undesirable latency in the rendering, or the use of outdated gaze information. This can lead to an uncomfortable user experience, or the use of a larger foveal region than necessary to reduce the impact of the gaze tracking latency.

It is in the context of the above discussion that the present disclosure arises.

### SUMMARY OF THE INVENTION

This disclosure is defined by claim 1.

Further respective aspects and features of the disclosure are defined in the appended claims.

It is to be understood that both the foregoing general description of the invention and the following detailed description are exemplary, but are not restrictive, of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically illustrates an HMD worn by a user;
Figure 2 is a schematic plan view of an HMD;
Figure 3 schematically illustrates the formation of a virtual image by an HMD;
Figure 4 schematically illustrates another type of display for use in an HMD;
Figure 5 schematically illustrates a pair of stereoscopic images;
Figure 6a schematically illustrates a plan view of an HMD;
Figure 6b schematically illustrates a near-eye tracking arrangement;
Figure 7 schematically illustrates a remote tracking arrangement;
Figure 8 schematically illustrates a gaze tracking environment;
Figure 9 schematically illustrates a gaze tracking system;
Figure 10 schematically illustrates a virtual scene;
Figure 11 schematically illustrates the scene with a foveal region applied to the image;
Figure 12 schematically illustrates a first modified display of the scene;
Figure 13 schematically illustrates a second modified display of the scene;
Figure 14 schematically illustrates an image rendering system; and
Figure 15 schematically illustrates an image rendering method.

### DESCRIPTION OF THE EMBODIMENTS

Referring now to the drawings, wherein like reference numerals designate identical or corresponding parts throughout the several views, embodiments of the present disclosure are described. While the embodiments are considered generally in the context of using HMDs as a display device, it would be apparent that such rendering techniques may also be applicable to other displays. For example, a television, mobile phone or games device, and a computer monitor each represent suitable alternative (or additional) display devices.

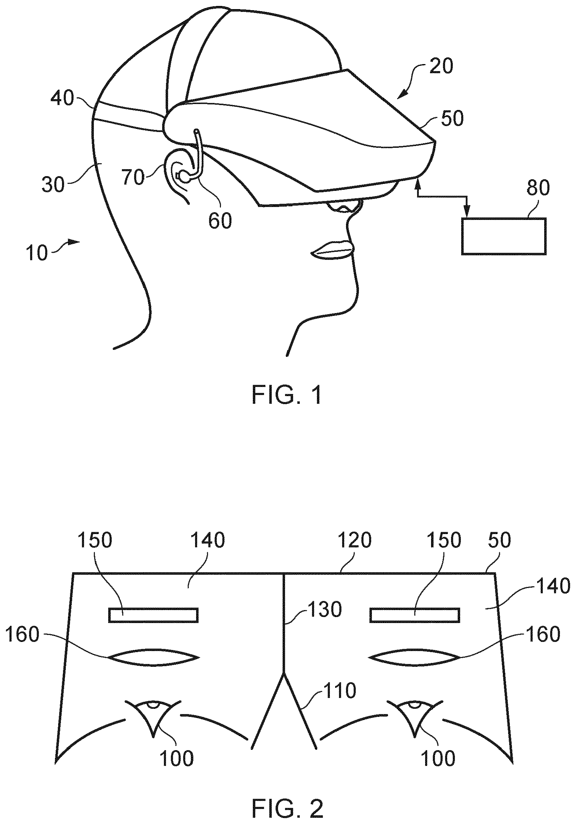

In Figure 1, a user 10 is wearing an HMD 20 (as an example of a generic head-mountable apparatus - other examples including audio headphones or a head-mountable light source) on the user's head 30. The HMD comprises a frame 40, in this example formed of a rear strap and a top strap, and a display portion 50. As noted above, many gaze tracking arrangements may be considered particularly suitable for use in HMD systems; however, use with such an HMD system should not be considered essential.

Note that the HMD of Figure 1 may comprise further features, to be described below in connection with other drawings, but which are not shown in Figure 1 for clarity of this initial explanation.

The HMD of Figure 1 completely (or at least substantially completely) obscures the user's view of the surrounding environment. All that the user can see is the pair of images displayed within the HMD, as supplied by an external processing device such as a games console in many embodiments. Of course, in some embodiments images may instead (or additionally) be generated by a processor or obtained from memory located at the HMD itself.

The HMD has associated headphone audio transducers or earpieces 60 which fit into the user's left and right ears 70. The earpieces 60 replay an audio signal provided from an external source, which may be the same as the video signal source which provides the video signal for display to the user's eyes.

The combination of the fact that the user can see only what is displayed by the HMD and, subject to the limitations of the noise blocking or active cancellation properties of the earpieces and associated electronics, can hear only what is provided via the earpieces, mean that this HMD may be considered as a so-called "full immersion" HMD. Note however that in some embodiments the HMD is not a full immersion HMD, and may provide at least some facility for the user to see and/or hear the user's surroundings. This could be by providing some degree of transparency or partial transparency in the display arrangements, and/or by projecting a view of the outside (captured using a camera, for example a camera mounted on the HMD) via the HMD's displays, and/or by allowing the transmission of ambient sound past the earpieces and/or by providing a microphone to generate an input sound signal (for transmission to the earpieces) dependent upon the ambient sound.

A front-facing camera 122 may capture images to the front of the HMD, in use. Such images may be used for head tracking purposes, in some embodiments, while it may also be suitable for capturing images for an augmented reality (AR) style experience. A Bluetooth^{®} antenna 124 may provide communication facilities or may simply be arranged as a directional antenna to allow a detection of the direction of a nearby Bluetooth transmitter.

In operation, a video signal is provided for display by the HMD. This could be provided by an external video signal source 80 such as a video games machine or data processing apparatus (such as a personal computer), in which case the signals could be transmitted to the HMD by a wired or a wireless connection. Examples of suitable wireless connections include Bluetooth^{®} connections. Audio signals for the earpieces 60 can be carried by the same connection. Similarly, any control signals passed from the HMD to the video (audio) signal source may be carried by the same connection. Furthermore, a power supply (including one or more batteries and/or being connectable to a mains power outlet) may be linked by a cable to the HMD. Note that the power supply and the video signal source 80 may be separate units or may be embodied as the same physical unit. There may be separate cables for power and video (and indeed for audio) signal supply, or these may be combined for carriage on a single cable (for example, using separate conductors, as in a USB cable, or in a similar way to a "power over Ethernet" arrangement in which data is carried as a balanced signal and power as direct current, over the same collection of physical wires). The video and/or audio signal may be carried by, for example, an optical fibre cable. In other embodiments, at least part of the functionality associated with generating image and/or audio signals for presentation to the user may be carried out by circuitry and/or processing forming part of the HMD itself. A power supply may be provided as part of the HMD itself.

Some embodiments of the invention are applicable to an HMD having at least one electrical and/or optical cable linking the HMD to another device, such as a power supply and/or a video (and/or audio) signal source. So, embodiments of the invention can include, for example:
(a) an HMD having its own power supply (as part of the HMD arrangement) but a cabled connection to a video and/or audio signal source;
(b) an HMD having a cabled connection to a power supply and to a video and/or audio signal source, embodied as a single physical cable or more than one physical cable;
(c) an HMD having its own video and/or audio signal source (as part of the HMD arrangement) and a cabled connection to a power supply; or
(d) an HMD having a wireless connection to a video and/or audio signal source and a cabled connection to a power supply.

If one or more cables are used, the physical position at which the cable enters or joins the HMD is not particularly important from a technical point of view. Aesthetically, and to avoid the cable(s) brushing the user's face in operation, it would normally be the case that the cable(s) would enter or join the HMD at the side or back of the HMD (relative to the orientation of the user's head when worn in normal operation). Accordingly, the position of the cables relative to the HMD in Figure 1 should be treated merely as a schematic representation.

Accordingly, the arrangement of Figure 1 provides an example of a head-mountable display system comprising a frame to be mounted onto an observer's head, the frame defining one or two eye display positions which, in use, are positioned in front of a respective eye of the observer and a display element mounted with respect to each of the eye display positions, the display element providing a virtual image of a video display of a video signal from a video signal source to that eye of the observer.

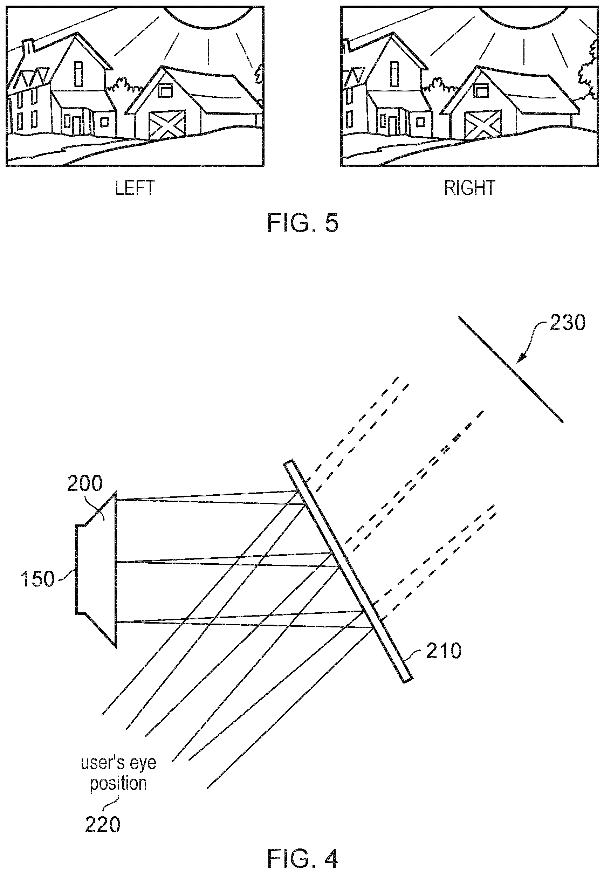

Figure 1 shows just one example of an HMD. Other formats are possible: for example an HMD could use a frame more similar to that associated with conventional eyeglasses, namely a substantially horizontal leg extending back from the display portion to the top rear of the user's ear, possibly curling down behind the ear. In other (not full immersion) examples, the user's view of the external environment may not in fact be entirely obscured; the displayed images could be arranged so as to be superposed (from the user's point of view) over the external environment. An example of such an arrangement will be described below with reference to Figure 4.

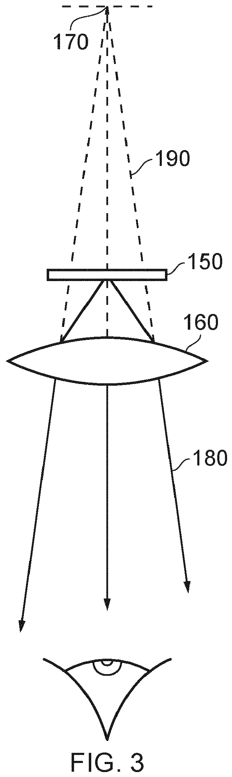

In the example of Figure 1, a separate respective display is provided for each of the user's eyes. A schematic plan view of how this is achieved is provided as Figure 2, which illustrates the positions 100 of the user's eyes and the relative position 110 of the user's nose. The display portion 50, in schematic form, comprises an exterior shield 120 to mask ambient light from the user's eyes and an internal shield 130 which prevents one eye from seeing the display intended for the other eye. The combination of the user's face, the exterior shield 120 and the interior shield 130 form two compartments 140, one for each eye. In each of the compartments there is provided a display element 150 and one or more optical elements 160. The way in which the display element and the optical element(s) cooperate to provide a display to the user will be described with reference to Figure 3.

Referring to Figure 3, the display element 150 generates a displayed image which is (in this example) refracted by the optical elements 160 (shown schematically as a convex lens but which could include compound lenses or other elements) so as to generate a virtual image 170 which appears to the user to be larger than and significantly further away than the real image generated by the display element 150. As an example, the virtual image may have an apparent image size (image diagonal) of more than 1 m and may be disposed at a distance of more than 1 m from the user's eye (or from the frame of the HMD). In general terms, depending on the purpose of the HMD, it is desirable to have the virtual image disposed a significant distance from the user. For example, if the HMD is for viewing movies or the like, it is desirable that the user's eyes are relaxed during such viewing, which requires a distance (to the virtual image) of at least several metres. In Figure 3, solid lines (such as the line 180) are used to denote real optical rays, whereas broken lines (such as the line 190) are used to denote virtual rays.

An alternative arrangement is shown in Figure 4. This arrangement may be used where it is desired that the user's view of the external environment is not entirely obscured. However, it is also applicable to HMDs in which the user's external view is wholly obscured. In the arrangement of Figure 4, the display element 150 and optical elements 200 cooperate to provide an image which is projected onto a mirror 210, which deflects the image towards the user's eye position 220. The user perceives a virtual image to be located at a position 230 which is in front of the user and at a suitable distance from the user.

In the case of an HMD in which the user's view of the external surroundings is entirely obscured, the mirror 210 can be a substantially 100% reflective mirror. The arrangement of Figure 4 then has the advantage that the display element and optical elements can be located closer to the centre of gravity of the user's head and to the side of the user's eyes, which can produce a less bulky HMD for the user to wear. Alternatively, if the HMD is designed not to completely obscure the user's view of the external environment, the mirror 210 can be made partially reflective so that the user sees the external environment, through the mirror 210, with the virtual image superposed over the real external environment.

In the case where separate respective displays are provided for each of the user's eyes, it is possible to display stereoscopic images. An example of a pair of stereoscopic images for display to the left and right eyes is shown in Figure 5. The images exhibit a lateral displacement relative to one another, with the displacement of image features depending upon the (real or simulated) lateral separation of the cameras by which the images were captured, the angular convergence of the cameras and the (real or simulated) distance of each image feature from the camera position.

Note that the lateral displacements in Figure 5 could in fact be the other way round, which is to say that the left eye image as drawn could in fact be the right eye image, and the right eye image as drawn could in fact be the left eye image. This is because some stereoscopic displays tend to shift objects to the right in the right eye image and to the left in the left eye image, so as to simulate the idea that the user is looking through a stereoscopic window onto the scene beyond. However, some HMDs use the arrangement shown in Figure 5 because this gives the impression to the user that the user is viewing the scene through a pair of binoculars. The choice between these two arrangements is at the discretion of the system designer.

In some situations, an HMD may be used simply to view movies and the like. In this case, there is no change required to the apparent viewpoint of the displayed images as the user turns the user's head, for example from side to side. In other uses, however, such as those associated with virtual reality (VR) or augmented reality (AR) systems, the user's viewpoint needs to track movements with respect to a real or virtual space in which the user is located.

As mentioned above, in some uses of the HMD, such as those associated with virtual reality (VR) or augmented reality (AR) systems, the user's viewpoint needs to track movements with respect to a real or virtual space in which the user is located.

This tracking is carried out by detecting motion of the HMD and varying the apparent viewpoint of the displayed images so that the apparent viewpoint tracks the motion. The detection may be performed using any suitable arrangement (or a combination of such arrangements). Examples include the use of hardware motion detectors (such as accelerometers or gyroscopes), external cameras operable to image the HMD, and outwards-facing cameras mounted onto the HMD.

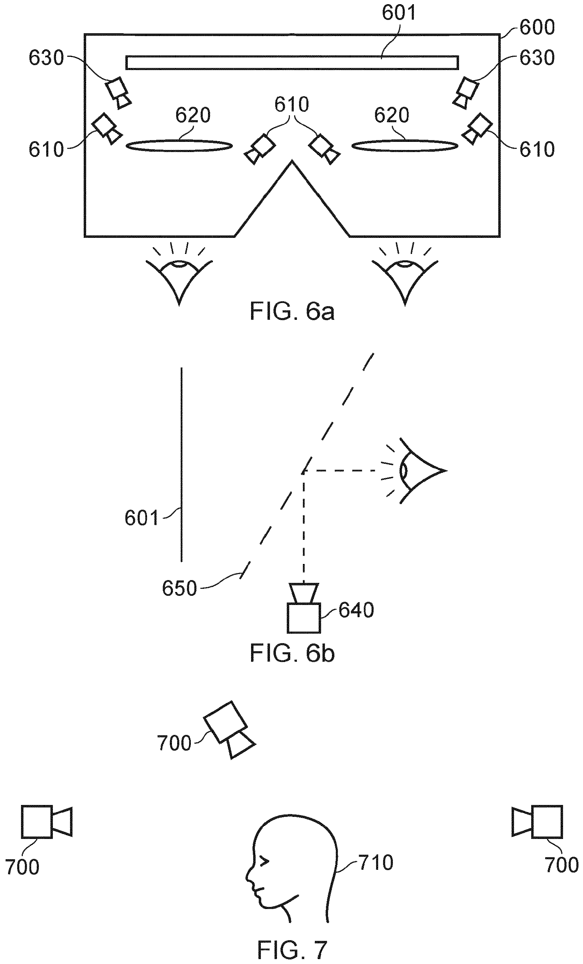

Turning to gaze tracking in such an arrangement, Figure 6 schematically illustrates two possible arrangements for performing eye tracking on an HMD. The cameras provided within such arrangements may be selected freely so as to be able to perform an effective eye-tracking method. In some existing arrangements, visible light cameras are used to capture images of a user's eyes. Alternatively, infra-red (IR) cameras are used so as to reduce interference either in the captured signals or with the user's vision should a corresponding light source be provided, or to improve performance in low-light conditions.

Figure 6a shows an example of a gaze tracking arrangement in which the cameras are arranged within an HMD so as to capture images of the user's eyes from a short distance. This may be referred to as near-eye tracking, or head-mounted tracking.

In this example, an HMD 600 (with a display element 601) is provided with cameras 610 that are each arranged so as to directly capture one or more images of a respective one of the user's eyes using an optical path that does not include the lens 620. This may be advantageous in that distortion in the captured image due to the optical effect of the lens is able to be avoided. Four cameras 610 are shown here as examples of possible positions that eye-tracking cameras may provided, although it should be considered that any number of cameras may be provided in any suitable location so as to be able to image the corresponding eye effectively. For example, only one camera may be provided per eye or more than two cameras may be provided for each eye.

However it is considered that in a number of embodiments it is advantageous that the cameras are instead arranged so as to include the lens 620 in the optical path used to capture images of the eye. Examples of such positions are shown by the cameras 630. While this may result in processing being required to enable suitably accurate tracking to be performed, due to the deformation in the captured image due to the lens, this may be performed relatively simply due to the fixed relative positions of the corresponding cameras and lenses. An advantage of including the lens within the optical path may be that of simplifying the physical constraints upon the design of an HMD, for example.

Figure 6b shows an example of a gaze tracking arrangement in which the cameras are instead arranged so as to indirectly capture images of the user's eyes. Such an arrangement may be particularly suited to use with IR or otherwise non-visible light sources, as will be apparent from the below description.

Figure 6b includes a mirror 650 arranged between a display 601 and the viewer's eye (of course, this can be extended to or duplicated at the user's other eye as appropriate). For the sake of clarity, any additional optics (such as lenses) are omitted in this Figure - it should be appreciated that they may be present at any suitable position within the depicted arrangement. The mirror 650 in such an arrangement is selected so as to be partially transmissive; that is, the mirror 650 should be selected so as to enable the camera 640 to obtain an image of the user's eye while the user views the display 601. One method of achieving this is to provide a mirror 650 that is reflective to IR wavelengths but transmissive to visible light - this enables IR light used for tracking to be reflected from the user's eye towards the camera 640 while the light emitted by the display 601 passes through the mirror uninterrupted.

Such an arrangement may be advantageous in that the cameras may be more easily arranged out of view of the user, for instance. Further to this, improvements to the accuracy of the eye tracking may be obtained due to the fact that the camera captures images from a position that is effectively (due to the reflection) along the axis between the user's eye and the display.

Of course, eye-tracking arrangements need not be implemented in a head-mounted or otherwise near-eye fashion as has been described above. For example, Figure 7 schematically illustrates a system in which a camera is arranged to capture images of the user from a distance; this distance may vary during tracking, and may take any value in dependence upon the parameters of the tracking system. For example, this distance may be thirty centimetres, a metre, five metres, ten metres, or indeed any value so long as the tracking is not performed using an arrangement that is affixed to the user's head.

In Figure 7, an array of cameras 700 is provided that together provide multiple views of the user 710. These cameras are configured to capture information identifying at least the direction in which a user's 710 eyes are focused, using any suitable method. For example, IR cameras may be utilised to identify reflections from the user's 710 eyes. An array of cameras 700 may be provided so as to provide multiple views of the user's 710 eyes at any given time, or may be provided so as to simply ensure that at any given time at least one camera 700 is able to view the user's 710 eyes. It is apparent that in some use cases it may not be necessary to provide such a high level of coverage and instead only one or two cameras 700 may be used to cover a smaller range of possible viewing directions of the user 710.

Of course, the technical difficulties associated with such a long-distance tracking method may be increased; higher resolution cameras may be required, as may stronger light sources for generating IR light, and further information (such as head orientation of the user) may need to be input to determine a focus of the user's gaze. The specifics of the arrangement may be determined in dependence upon a required level of robustness, accuracy, size, and/or cost, for example, or any other design consideration.

Despite technical challenges including those discussed above, such tracking methods may be considered beneficial in that they allow a greater range of interactions for a user - rather than being limited to HMD viewing, gaze tracking may be performed for a viewer of a television, for instance.

Rather than varying only in the location in which cameras are provided, eye-tracking arrangements may also differ in where the processing of the captured image data to determine tracking data is performed.

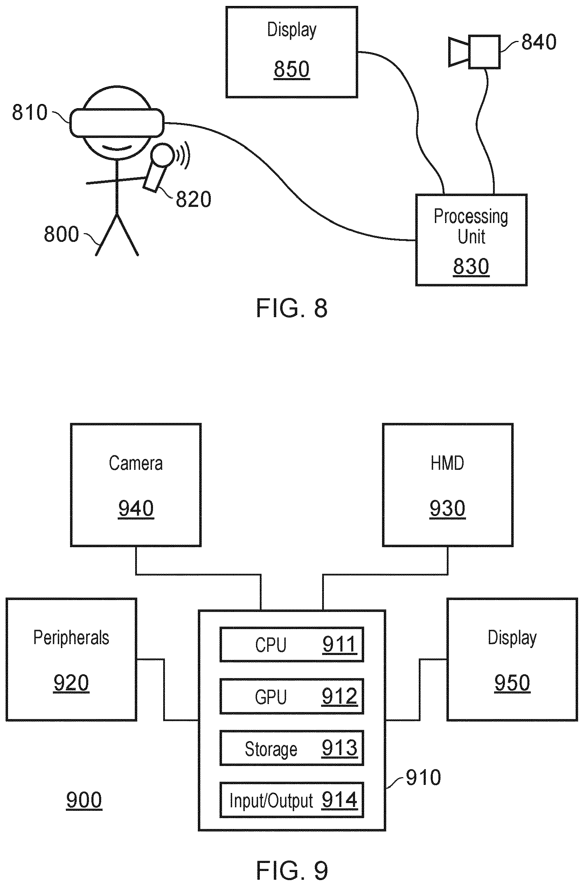

Figure 8 schematically illustrates an environment in which an eye-tracking process may be performed. In this example, the user 800 is using an HMD 810 that is associated with the processing unit 830, such as a games console, with the peripheral 820 allowing a user 800 to input commands to control the processing. The HMD 810 may perform eye tracking in line with an arrangement exemplified by Figure 6a or 6b, for example - that is, the HMD 810 may comprise one or more cameras operable to capture images of either or both of the user's 800 eyes. The processing unit 830 may be operable to generate content for display at the HMD 810; although some (or all) of the content generation may be performed by processing units within the HMD 810.

The arrangement in Figure 8 also comprises a camera 840, located outside of the HMD 810, and a display 850. In some cases, the camera 840 may be used for performing tracking of the user 800 while using the HMD 810, for example to identify body motion or a head orientation. The camera 840 and display 850 may be provided as well as or instead of the HMD 810; for example these may be used to capture images of a second user and to display images to that user while the first user 800 uses the HMD 810, or the first user 800 may be tracked and view content with these elements instead of the HMD 810. That is to say, the display 850 may be operable to display generated content provided by the processing unit 830 and the camera 840 may be operable to capture images of one or more users' eyes to enable eye-tracking to be performed.

While the connections shown in Figure 8 are shown by lines, this should of course not be taken to mean that the connections should be wired; any suitable connection method, including wireless connections such as wireless networks or Bluetooth^{®}, may be considered suitable. Similarly, while a dedicated processing unit 830 is shown in Figure 8 it is also considered that the processing may in some embodiments be performed in a distributed manner - such as using a combination of two or more of the HMD 810, one or more processing units, remote servers (cloud processing), or games consoles.

The processing required to generate tracking information from captured images of the user's 800 eye or eyes may be performed locally by the HMD 810, or the captured images or results of one or more detections may be transmitted to an external device (such as a the processing unit 830) for processing. In the former case, the HMD 810 may output the results of the processing to an external device for use in an image generation process if such processing is not performed exclusively at the HMD 810. In embodiments in which the HMD 810 is not present, captured images from the camera 840 are output to the processing unit 830 for processing.

Figure 9 schematically illustrates a system for performing one or more eye tracking processes, for example in an embodiment such as that discussed above with reference to Figure 8. The system 900 comprises a processing device 910, one or more peripherals 920, an HMD 930, a camera 940, and a display 950. Of course, not all elements need be present within the system 900 in a number of embodiments - for instance, if the HMD 930 is present then it is considered that the camera 940 may be omitted as it is unlikely to be able to capture images of the user's eyes.

As shown in Figure 9, the processing device 910 may comprise one or more of a central processing unit (CPU) 911, a graphics processing unit (GPU) 912, storage (such as a hard drive, or any other suitable data storage medium) 913, and an input/output 914. These units may be provided in the form of a personal computer, a games console, or any other suitable processing device.

For example, the CPU 911 may be configured to generate tracking data from one or more input images of the user's eyes from one or more cameras, or from data that is indicative of a user's eye direction. This may be data that is obtained from processing images of the user's eye at a remote device, for example. Of course, should the tracking data be generated elsewhere then such processing would not be necessary at the processing device 910.

The GPU 912 may be configured to generate content for display to the user on which the eye tracking is being performed. In some embodiments, the content itself may be modified in dependence upon the tracking data that is obtained - an example of this is the generation of content in accordance with a foveal rendering technique. Of course, such content generation processes may be performed elsewhere - for example, an HMD 930 may have an on-board GPU that is operable to generate content in dependence upon the eye tracking data.

The storage 913 may be provided so as to store any suitable information. Examples of such information include program data, content generation data, and eye tracking model data. In some cases, such information may be stored remotely such as on a server, and as such a local storage 913 may not be required - the discussion of the storage 913 should therefore be considered to refer to local (and in some cases removable storage media) or remote storage.

The input/output 914 may be configured to perform any suitable communication as appropriate for the processing device 910. Examples of such communication include the transmission of content to the HMD 930 and/or display 950, the reception of eye-tracking data and/or images from the HMD 930 and/or the camera 940, and communication with one or more remote servers (for example, via the internet).

As discussed above, the peripherals 920 may be provided to allow a user to provide inputs to the processing device 910 in order to control processing or otherwise interact with generated content. This may be in the form of button presses or the like, or alternatively via tracked motion to enable gestures to be used as inputs.

The HMD 930 may comprise a number of sub-elements, which have been omitted from Figure 9 for the sake of clarity. Of course, the HMD 930 should comprise a display unit operable to display images to a user. In addition to this, the HMD 930 may comprise any number of suitable cameras for eye tracking (as discussed above), in addition to one or more processing units that are operable to generate content for display and/or generate eye tracking data from the captured images.

The camera 940 and display 950 may be configured in accordance with the discussion of the corresponding elements above with respect to Figure 8.

Turning to the image capture process upon which the eye tracking is based, examples of different cameras are discussed. The first of these is a standard camera, which captures a sequence of images of the eye that may be processed to determine tracking information. The second is that of an event camera, which instead generates outputs in accordance with observed changes in brightness.

It is more common to use standard cameras in such tracking arrangements, given that they are widely available and often relatively cheap to produce. 'Standard cameras' here refer to cameras which capture images of the environment at predetermined intervals which can be combined to generate video content. For example, a typical camera of this type may capture thirty images (frames) each second, and these images may be output to a processing unit for feature detection or the like to be performed so as to enable tracking of the eye.

Such a camera comprises a light-sensitive array that is operable to record light information during an exposure time, with the exposure time being controlled by a shutter speed (the speed of which dictates the frequency of image capture). The shutter may be configured as a rolling shutter (line-by-line reading of the captured information) or a global shutter (reading the captured information of the whole frame simultaneously), for example.

However, in some arrangements it may be considered advantageous to instead use an event camera, which may also be referred to as a dynamic vision sensor. Such cameras do not require a shutter as described above, and instead each element of the light-sensitive array (often referred to as a pixel) is configured to output a signal at any time a threshold brightness change is observed. This means that images are not output in the traditional sense - however an image reconstruction algorithm may be applied that is able to generate an image from the signals output by an event camera.

While there is an increased computational complexity for generating an image from such data, the output of the event camera can be used for tracking without any image generation. One example of how this is performed is that of using an IR-sensitive event camera; when imaged using IR light, the pupil of the human eye displays a much higher level of brightness than the surrounding features. By selecting an appropriate threshold brightness, the motion of the pupil would be expected to trigger events (and corresponding outputs) at the sensor.

Independent of the type of camera that is selected, in many cases it may be advantageous to provide illumination to the eye in order to obtain a suitable image. One example of this is the provision of an IR light source that is configured to emit light in the direction of one or both of the user's eyes; an IR camera may then be provided that is able to detect reflections from the user's eye in order to generate an image. IR light may be preferable as it is invisible to the human eye, and as such does not interfere with normal viewing of content by the user, but it is not considered to be essential. In some cases, the illumination may be provided by a light source that is affixed to the imaging device, while in other embodiments it may instead be that the light source is arranged away from the imaging device.

The above discussion of an HMD and its use is provided as an exemplary arrangement for implementing methods according to one or more embodiments of the present disclosure. However, as noted above, embodiments may be equally applicable for arrangements which comprise other display devices such as televisions, mobile devices (such as mobile phones), and computer monitors.

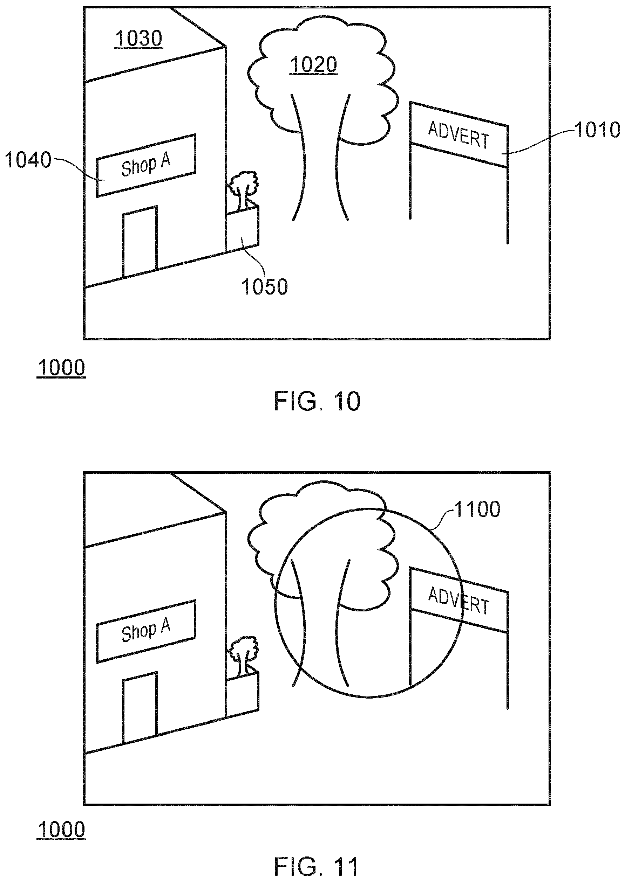

Figure 10 schematically illustrates an exemplary scene 1000 to be displayed on a display device. The scene comprises a number of elements, each of which may have a different level of importance within the scene and a differing level of visual impact upon the user viewing the scene. As such, it may be considered advantageous that the display of the elements within the scene may be implemented in a non-uniform manner. In particular, the display of these elements is discussed below with reference to a foveal rendering style implementation (although the present disclosure should not be considered to be limited to such implementations).

The scene 1000 in Figure 10 includes an advertisement board 1010, a tree 1020, a shop 1030 with corresponding signage 1040, and a plant 1050. As noted above, these are considered to be a selection of exemplary elements that could appear in a scene representing a range of different levels of importance and visual impact; as such, the specific representations of these elements should not be considered limiting, and it should be appreciated that the general principles discussed here are applicable to any other virtual objects or elements as appropriate.

The advertisement board 1010 is an example of an element that may be prioritised for display by a game developer. The advertisement may be for an in-game item or event, for example, or for real-world products such as a game sequel or a sponsored product. In either case, this may be considered to be an element that is subjected to preferential display to increase the ability and/or likelihood of viewing by a user. As such, it may be desirable to maintain a high display quality whether the advertisement board 1010 is being directly viewed by the user or not.

The tree 1020 is an example of a typical object within a scene that generally does not have a particularly large impact; while they are often sizeable objects, they are generally considered to be background objects rather than objects of focus - players are not expected to interact with them in most circumstances. Objects such as the tree 1020 are therefore regarded as objects that should be displayed with a medium priority; this is a compromise between the size of the object making it visually impactful, and the low importance of the object to the content. This means that while such objects should be displayed under any circumstance, it is not necessary to display the objects with a high quality when not being focused upon by a user.

The shop 1030 is an example of an object that requires only a low level of detail when not being focused upon by a user; it is sufficient that the user is able to identify that a building exists in their peripheral vision without the need for additional detail to be displayed. It may therefore be sufficient to show the shop 1030 with a much lower level of detail when not being focused upon by a user.

In contrast to this, the signage 1040 associated with the shop 1030 may be considered to be more significant within the scene 1000. In addition to this, the signage 1040 may be more sensitive to reductions in quality than the shop 1030 itself. That is to say that the signage 1040 may comprise a more complex and significant range of shapes and colours, and that these may be more difficult to recognise at a lower quality. It may therefore be advantageous to display such an object with a high priority. However, it is also considered that in some cases the signage 1040 may be associated with a store that is not of relevance to the user - either as a non-accessible store placed to add character to the scene, or because it is not associated with a quest or goal. In such cases, it may be considered that the signage 1040 would be associated with a low priority display. Such conditions may be dynamic within the content, such as varying on a game state or user preference, and as such this is considered to be an example of a variable display priority within the content.

The plant 1050 is an example of an object that is placed to add character to the scene without performing any particular function; similar to the tree 1020 in function, the plant 1050 is clearly smaller and as such has a smaller visual impact than the tree 1020. As such, it may be considered that when not focused upon by the user it may be appropriate to not display the plant 1050 at all rather than only using a reduced image quality.

Figure 11 illustrates the scene of Figure 10 with a foveal region 1100 applied to the image. This foveal region represents a region of high-quality image rendering within an image; this region may be located to coincide with a user's point of focus on the display, or may be defined without the use of gaze tracking information (such as in a predictive arrangement, or a contextual arrangement, in which objects are selected that are expected or desired as a point of focus). High quality image rendering may refer to content with a higher resolution, increased number of colours, more detailed models, and/or more detailed textures, for example.

In foveated rendering arrangements, the foveal region comprises content displayed at a high image quality while all areas outside of this foveal region are rendered with a lower image quality. In some implementations, the foveal region may be surrounded by another region that has a medium image quality or the transition between high and low quality may be performed in a continuous manner rather than having a sharp boundary as is suggested by the circle 1100 in Figure 11.

Foveated rendering is discussed here as an example of a rendering process that generates an image with a non-uniform image quality. Other techniques may also be considered an appropriate basis for generating an image - for instance, a central portion of an image (such as a square or a rectangle) may be rendered at a high quality, or indeed any other portion of the image. This may be appropriate in many cases, as often the centre of the image is where things of interest usually take place. Similarly, in games or other media in which a third person view of a character is provided it may be suitable to provide a region of the image surrounding that character using a high image quality and other content using a low image quality.

Another exemplary alternative is that of an image rendering method which utilises a saliency map to identify the importance or relevance of different regions within the image content. Based upon this information, regions of high or low quality within the display area may be identified such that the image quality is proportional or otherwise corresponds to the importance of that region as identified by the saliency map. The saliency map may be generated based upon object information in any suitable manner, or may be authored by a content creator or the like.

It is therefore apparent that any suitable variable-quality rendering technique may be used as the basis for embodiments of the present disclosure.

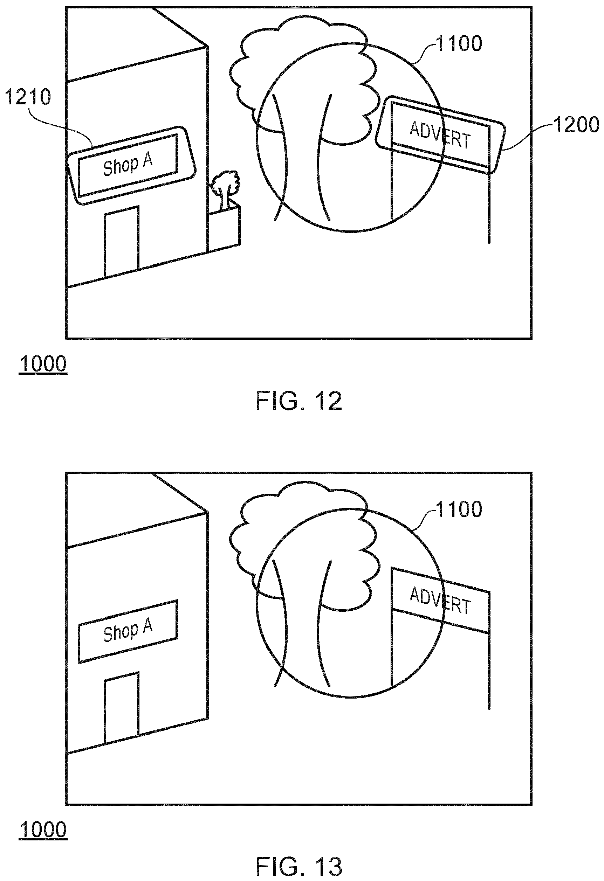

Figure 12 schematically illustrates a modified display of the scene according to a number of embodiments of the present disclosure. In particular, this Figure shows the display of an image region with a high level of quality independent of its location on the display. In this scene, the area outside of the foveal region 1100 and the high-quality regions 1200 and 1210 represents areas of low-quality display. This area includes most of the scene 1000 outside of the foveal region 1100, except for the advertisement board 1010 and the signage 1040. These high quality regions 1200 and 1210 are shown to identify elements within the image, rather than necessarily indicating the boundaries between high- and low-quality display of content - the size and shape of the regions may in practice differ from that shown as appropriate for a given implementation.

The advertisement board 1010 (as shown within the region 1200) is displayed with a high image quality as it is partially within the foveal region 1100, and as such is considered to be focused upon by the user, as well as being identified as being a high relevance object. Similarly, the signage 1040 (as shown within the region 1210) is considered to be of importance to the scene and/or the player and as such is displayed with a higher image quality than other parts of the scene also outside of the foveal region 1100.

By performing such a process, discontinuities in the display of an object may be avoided (such that the advertisement board 1010 is displayed in a uniform fashion) and content deemed to be important (such as the identity of the building 1030, as communicated by the signage 1040) can be more easily identified and viewed by a user. It is also envisaged that a higher quality display may assist in drawing user attention to specific objects or elements within the scene, and that there may be a reduction in visual artefacts (such as aliasing or glinting pixels) that can arise from quality reduction in the display of these more significant objects.

Figure 13 schematically illustrates a modified display of the scene according to a number of embodiments of the present disclosure. In particular, this Figure shows the modification so as to not show an object within the content when outside of the foveal (or otherwise high-quality region).

As in Figure 12, the area outside of the foveal region 1100 indicates the region of low-quality display of content. Within this area it is apparent that the plant 1050 is no longer present; being an element with a low visual impact and a low relevance to the scene it is considered to be sufficiently insignificant so as to not require rendering when not focused upon by the user.

While shown as two separate implementations here, the display modifications shown in Figures 12 and 13 may be implemented in combination as appropriate. For instance, objects in the area outside of the foveal region may be displayed with a high image quality while other objects in that area are not displayed at all.

Each of these properties (that is, those discussed with reference to Figures 12 and 13) may be implemented using a separate flag associated with each object as appropriate; for instance, an 'always high quality' (such as the display in Figure 12) and a 'only render in high quality region' (such as the display in Figure 13) flag may each be provided that are used to control these properties. Of course, only one of these flags may be included as appropriate in embodiments in which only one of these properties is to be implemented.

Alternatively, a single data field may be used that defines a minimum render quality for an object. This may have any suitable range of values; these may be defined freely by the skilled person for a given implementation.

For instance, a data field with the values '0' and '1' may be suitable to implement a basic version of the first display modification, where the values '0' and '1' define low and high quality image content. In this case, '0' may define low-quality and '1' defines high quality - an element with the value '1' is to be displayed with a high quality independent of location, while an element with a value of '0' may be displayed at high or low quality as appropriate for the element location.

By using a data field with three values, such as '0', '1', and '2', an implementation can be provided which utilises either (or both) of the modifications. In such an implementation, a value of '0' can indicate non-display of the content, a value of '1' rendering with a low quality, and a value of '2' rendering with a high quality. In this manner, content may have a defined minimum quality (wherein non-display of the content is considered to be the lowest possible quality in that it cannot be seen by a user) that can enable a variety of different rendering practices to be implemented.

Such an implementation may be simplified, such that a flag is used in place of the three values - '0' may be non-display, '1' may be high quality, and the absence of the flag may be taken as meaning normal display in which the element to be rendered is rendered according to the non-modified process.

Of course, any other suitable method of communicating the desired render parameters for an object may be used as appropriate; the above examples are provided simply to demonstrate possible implementations of embodiments of the present disclosure.

In some embodiments, these values can be determined by the author or content creator in a manual fashion during the development of the content. For instance, individual objects or groups of objects may be assigned a value or some other measure of the importance or how the object should be displayed during the development process. Groups of objects may be objects of a particular importance (such as 'background' or 'quest' objects), a particular type (such as 'trees' or 'buildings'), or a particular level of interactivity (such as 'user can interact' and 'user will likely interact'); of course, these groups are entirely exemplary and any suitable categorisation may be used as appropriate. Alternatively, or in addition, such a process may be at least partially automated so as to identify a suitable rendering parameter for an object without requiring manual input.

An alternative, or additional, method of enabling such a view is to perform an analysis during playback of the content (or in advance if the content to be played back is predictable, such as video content). An example of such a method is that of generating a saliency map for an un-modified image (that is, an image without any quality adjustment or modification having been performed), performing a foveation process on the image, and generating a second saliency map. Adjustments can then be made to the foveated image (so as to increase or reduce render quality, or omit objects altogether) so as to reduce the difference between the saliency maps whilst falling within a render budget.

Of course, such a process could be performed for a representative sample of images (such as a number of frames within a game) to determine general principles that can be applied to the content when generating new images (such as frames of gameplay other than those sampled). That is to say that an appropriate render quality for one or more objects within the representative sample of images can be identified, and this render quality can be applied throughout the content when generating new and/or other image frames.

In some embodiments it may be advantageous to be able to be able to map an object location to a screen location in order to determine a render value. This may be performed using any suitable method; it is not required that any particular implementation be considered.

When it comes to representing these different render qualities at the time of rendering, one or more of a number of different approaches may be used. The below discussion refers to the representation of objects, although of course it may be considered that this can refer to any element within the content including parts of objects or other elements that may not generally be considered objects (such as representations of people).

For instance, in some embodiments alternative textures and/or models may be used to represent an object. These textures may comprise largely the same representation object, but with a higher resolution and/or number of colours or the like so as to provide a more detailed rendering of the object. Of course, a texture with a lower resolution and/or number of colours may be selected where a lower quality is desired. Similarly, several models may be available representing the same object with different levels of detail - for instance, by varying the number of vertices in a mesh used to represent an object.

This is an example of a modification to the scene being represented resulting in a modification to the output images that are generated.

Alternatively, or in addition, the quality differences for rendered objects may be implemented in a shader. One example of this is by using a sampling rate that varies across the image, such that a higher sampling rate is associated with an object with a higher level of quality. In some embodiments, the process includes determining the location of an object and the identification of one or more pixel regions associated with the location of the object. In such an embodiment, the shading rate for an object may therefore extend beyond the boundary of the object - in such a case, it is considered that the highest sampling rate that is deemed to be associated with a pixel region may be used (although any other method of handling such a conflict may be used).

Such implementations are considered to be entirely exemplary, and the use of alternative (or additional) methods of varying a render quality within an image may be applied based upon the defined render qualities for objects as described above.

While the above discussion has focused on a location-based variance in the rendering process, in some embodiments that rendering process instead determines rendering parameters based upon the relative importance of the object within the scene being viewed. Those objects which are deemed to be more important, based upon the value of the rendering parameter associated with those objects, may be rendered with a higher image quality. In such cases, the minimum rendering parameter for objects within the scene may be used as an input when allocating a render budget for instance - in this manner, the rendering parameter used when rendering an object may differ to the minimum as defined as any excess rendering capacity may be distributed amongst the objects in dependence upon the minimum rendering parameter.

In some cases, those with a smaller minimum may be prioritised for improved rendering as the increase in perceived quality may be higher for a given allocation of resources than when those objects with a higher minimum are targeted for improved rendering. That is to say that the worse the rendering for an object, the fewer resources required to improve the rendering noticeably. Alternatively, those objects with a higher minimum may be prioritised as these are likely to be the objects being focused upon by a user. Any other alternative rendering schemes may be considered appropriate, the examples here are entirely illustrative and not intended to be limiting.

In some embodiments, a process may be performed so as to determine a render quality to be used when rendering a scene that is different for one or more objects in that scene. This process may be dependent on one or more considerations (such as those discussed below) as appropriate for a given implementation.

A first example of this may be to account for the preferences of a user that is viewing the rendered images. For instance, the user may prefer that particular objects (such as collectables or quest items in a video game) are displayed with a higher quality than that which would otherwise be determined. Similarly, a user may determine that they are willing to reduce the level of quality in one or more regions so as to allow a higher render quality in the foveal region (for instance).

Another example is that of modifying the rendering quality so as to stay within a render budget for a scene. This can be implemented in a number of different ways; for instance, the render quality may be increased for high-quality render objects (or decreased for low-quality render objects) preferentially relative to lower-quality render objects (or higher-quality render objects). Alternatively, or in addition, the screen location of the objects may be considered, such that objects further from the foveal region (or the determined point of user focus) may be reduced preferentially to reduce the render cost (or those closer may be increased preferentially where there is unused render budget).

As discussed above, a number of the advantages of the present disclosure may be associated with the use of a head-mountable display unit by a viewer. However, this should not be considered to be limiting. For instance, content displayed on a television or computer monitor may also be a suitable candidate for such processing. This is because the viewer is not able to view the whole of the display with a high level of detail (due to the foveal region of human vision being so small) and as such optimisations may be suitable in such arrangements.

Similarly, it is noted that content generated according to embodiments of the present disclosure may also be suitable for output to spectators as more detail may be provided in the generated images (due to the high quality rendering). This may lead to an increased efficiency of use of a rendering system, as content generated according to embodiments of the present disclosure may be suitable for both players and spectators while in other examples (such as foveated rendering systems) separate content may need to be generated for each.

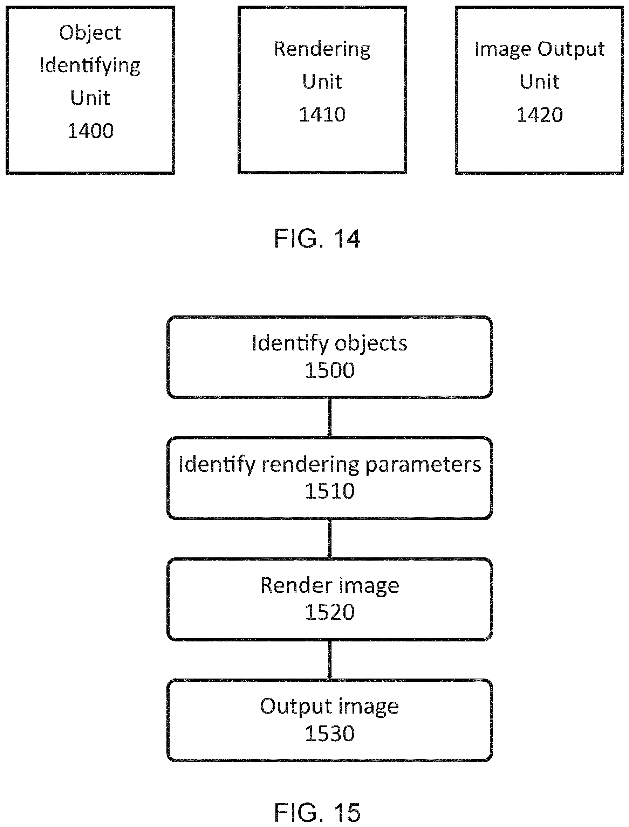

Figure 14 schematically illustrates an image rendering system for generating an image of a virtual environment. The system comprises an object identifying unit 1400, a rendering unit 1410, and an image output unit 1420. Such a system may be formed as a part of a more general rendering system, and may be configured so as to receive inputs from one or more components that determine the state of the virtual environment (for example). An example of this is as a part of a games console, or a distributed rendering system; for instance, the image rendering system of Figure 14 may be provided as a part of an HMD and may be configured to receive content from a games console or server or the like.

The object identifying unit 1400 is operable to identify one or more objects in the virtual environment, and to identify one or more rendering parameters associated with each object. This may be performed in any suitable manner; for instance, objects may be identified based upon identifying tags, or an image recognition process may be performed. In some cases, objects may not be directly identified as such, but instead the rendering parameters associated with each object may be obtained from a saliency map or the like (which is considered an indirect or implicit identification of the objects.

The rendering unit 1410 is operable to render an image comprising one or more of the identified objects in accordance with the corresponding rendering parameter, wherein the rendering parameter specifies a respective minimum level of detail with which the object is to be rendered. In some embodiments, the selected rendering parameter is based upon the relevance of the associated object to the scene; however, as noted above, this is not essential to the process. In embodiments in which the level of detail is dependent upon the location of the object within the image, the location of each object in the image may be calculated with reference to a determined point of user focus. This point of user focus may be measured (such as with a gaze tracking arrangement) or assumed (for example, based upon image context).

In those embodiments, it is considered that the image may comprise a first area in which rendering with a first level of detail is to be performed and one or more additional areas in which rendering with a respective level of detail lower than the first level of detail is to be performed. This first area may coincide with a focal area of a user, for instance, or may be based upon one or more contextual factors for the environment. In some cases, the first area may simply be the centre of the image. In a number of embodiments the rendering unit 1410 is operable, if the respective minimum level of detail associated with an object is higher than the level of detail associated with the area in which the object is present, to render the object at the higher level of detail.

In some embodiments the rendering unit 1410 may be operable to omit an object from the rendered image if the determined level of detail for rendering is equal to or below a threshold amount. Such a feature was discussed above with reference to Figure 12 in respect of the plant 1050.

The rendering unit 1410 may, in some embodiments, be operable to vary the level of detail with which one or more objects are to be rendered in dependence upon an available render budget. This allows the rendering unit 1410 to deviate from the minimum level of detail or the level of detail associated with a particular image area so as to enable a higher image quality to be generated by using any spare processing resources that are available (that is, by using more of the render budget than would be used if rendering each object at the initially determined level).

The rendering unit 1410 may be operable to vary the render quality associated with an object in any suitable manner. A first example of this is by selecting a mesh and/or texture representing an object in dependence upon the corresponding rendering parameter. Alternatively, or in addition, the rendering unit 1410 is operable to select a sampling rate for one or more areas of the image to be rendered in dependence upon one or more rendering parameters identified for the respective areas.

In some cases, the rendering parameter may be dependent upon context and/or an elapsed time within the virtual environment. For instance, an object may become more relevant (and therefore be assigned a higher rendering parameter, or a higher minimum level of detail) over time due to in-game conditions or the like; examples include objects becoming more or less important with a day/night cycle or changing in-game objectives.

The image output unit 1420 is operable to output rendered images to one or more display devices. These may include both user devices (that is, a device that is associated with a user interacting with the virtual environment such as the player of a game) and spectator devices (devices associated with users who do not interact with the virtual environment). In some embodiments one or more of the display devices is a head-mountable display device, although any other display device may be suitable for receiving the generated images (including televisions, mobile phones, and computer displays). In some instances the rendered images may not be output to a display device immediately, but instead may be saved to a storage device or the like for later use; alternatively, the rendered images may be both output for display and saved for later viewing as appropriate.

The arrangement of Figure 14 is an example of a processor (for example, a GPU and/or CPU located in a games console or any other computing device) that is operable to generate an image of a virtual environment, and in particular is operable to:
identify one or more objects in the virtual environment, and to identify one or more rendering parameters associated with each object; and
render an image comprising one or more of the identified objects in accordance with the corresponding rendering parameter, wherein the rendering parameter specifies a respective minimum level of detail with which the object is to be rendered.

Figure 15 schematically illustrates an image rendering method for generating one or more images of a virtual environment. The order of the steps shown below may be varied as appropriate; for instance, the rendering parameters may be identified in advance of the objects being identified. Equally, the rendering step may be initiated before any of the other steps are implemented in some embodiments.

A step 1500 comprises identifying one or more objects in the virtual environment. As noted above, this may be an explicit identification in which each object is able to be identified separately; alternatively this may be an implicit identification in which objects may be inferred from the rendering parameters that are identified.

A step 1510 comprises identifying one or more rendering parameters associated with each object. This may be in the form of metadata or the like, or in the form of a saliency map, to provide examples of such an identification being performed. Any other suitable method may also be considered appropriate here, rather than being limited only to these examples.

A step 1520 comprises rendering an image comprising one or more of the identified objects in accordance with the corresponding rendering parameter, wherein the rendering parameter specifies a respective minimum level of detail with which the object is to be rendered.

An optional step 1530 comprises outputting the images rendered in step 1520 to one or more display devices. One alternative to this step is that of instead storing the rendered images for later use.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

Thus, the foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. An image rendering system for generating one or more images of a virtual environment, the system comprising:
an object identifying unit operable to identify one or more objects in the virtual environment, and to identify one or more rendering parameters associated with each object; and
a rendering unit operable to render an image comprising one or more of the identified objects in accordance with the corresponding rendering parameter, wherein the rendering parameter specifies a respective minimum level of detail with which the object is to be rendered.

2. A system according to claim 1, wherein the rendering unit is operable to render objects with a level of detail that is dependent upon the location of each object within the image.

3. A system according to claim 2, wherein the location of each object in the image is calculated with reference to a determined point of user focus.

4. A system according to either of claims 1 and 2, wherein the image comprises a first area in which rendering with a first level of detail is to be performed and one or more additional areas in which rendering with a respective level of detail lower than the first level of detail is to be performed.

5. A system according to claim 4, wherein the rendering unit is operable, if the respective minimum level of detail associated with an object is higher than the level of detail associated with the area in which the object is present, to render the object at the higher level of detail.

6. A system according to any preceding claim, wherein the rendering unit is operable to omit an object from the rendered image if the determined level of detail for rendering is equal to or below a threshold amount.

7. A system according to any preceding claim, wherein the rendering unit is operable to vary the level of detail with which one or more objects are to be rendered in dependence upon an available render budget.

8. A system according to any preceding claim, wherein the rendering unit is operable to select a mesh and/or texture representing an object in dependence upon the corresponding rendering parameter.

9. A system according to any preceding claim, wherein the rendering unit is operable to select a sampling rate for one or more areas of the image to be rendered in dependence upon one or more rendering parameters identified for the respective areas.

10. A system according to any preceding claim, wherein the rendering parameter is dependent upon context and/or an elapsed time within the virtual environment.

11. A system according to any preceding claim, comprising an image output unit operable to output rendered images to one or more display devices.

12. A system according to claim 11, wherein one or more of the display devices is a head-mountable display device.

13. An image rendering method for generating one or more images of a virtual environment, the method comprising:
identifying one or more objects in the virtual environment;
identifying one or more rendering parameters associated with each object; and
rendering an image comprising one or more of the identified objects in accordance with the corresponding rendering parameter, wherein the rendering parameter specifies a respective minimum level of detail with which the object is to be rendered.

14. Computer software which, when executed by a computer, causes the computer to carry out the method of claim 13.

15. A non-transitory machine-readable storage medium which stores computer software according to claim 14.
